# EUROPEAN PATENT SPECIFICATION

(11) **EP 1 947 123 B1**
(45) Date of publication and mention of the grant of the patent: **09.03.2016**
(21) Application number: 06805124.2
(22) Date of filing: 31.10.2006
(51) Int. Cl.: C08F 4/64, C08F 10/00, B01J 31/38

(54) **CATALYST COMPONENT FOR ETHYLENE POLYMERIZATION, PREPARATION THEREOF AND CATALYST CONTAINING THE SAME**
KATALYSATORKOMPONENTE FÜR DIE ETHYLENPOLYMERISATION, HERSTELLUNG DAVON UND KATALYSATOR DAMIT
COMPOSANT CATALYTIQUE DESTINE A LA POLYMERISATION DE L ETHYLENE, SA PREPARATION ET CATALYSEUR LE CONTENANT

(30) Priority: 31.10.2005 CN 200510117427; 31.10.2005 CN 200510117428
(43) Date of publication of application: 23.07.2008
(73) Proprietor: China Petroleum & Chemical Corporation, Beijing 100029 (CN); Beijing Research Institute of Chemical Industry, China Petroleum &Chemical Corporation, Beijing 100013 (CN)
(72) Inventor: CHEN, Wei, Beijing 100013 (CN); GUO, Zifang, Beijing 100013 (CN); ZHOU, Junling, Beijing 100013 (CN); WANG, Hongtao, Beijing 100013 (CN); YANG, Hongxu, Beijing 100013 (CN); LI, Ruixia, Beijing 100013 (CN); WANG, Ruiping, Beijing 100013 (CN)
(74) Representative: Nunnenkamp, Jörg
(86) International application number: PCT/CN2006/002923
(87) International publication number: WO 2007/051410

(56) References cited:
- EP-A- 1 083 187
- CN-A- 1 176 258
- JP-A- 07 206 922
- JP-A- 07 206 923
- JP-A- 10 195 153
- US-A- 5 556 822
- US-A1- 2004 229 748
- DATABASE CA [Online] CHEMICAL ABSTRACTS SERVICE, COLUMBUS, OHIO, US; JIN, MAOZHU ET AL JIN, MAOZHU ET AL: "Preparation of compound catalysts for preparing polypropylene with broad molecular weight distributions Preparation of compound catalysts for preparing polypropylene with broad molecular weight distributions" XP002494786 retrieved from STN Database accession no. 2001:276062 & CN 1 266 066 A (BEIJING CHEMICAL INST., SINOPEC, PEOP. REP. CHINA BEIJING CHEMICAL INS) 13 September 2000 (2000-09-13)

## Description

### Field of the Invention

The present invention relates to a method for preparing a catalyst component for ethylene polymerization.

### Background

It is known that catalyst systems containing titanium and magnesium are predominant catalysts in commercial production of polyethylene. The research on such catalysts focuses mainly on catalytic activity, particle morphology and particle size distribution of catalyst, hydrogen response of catalyst, copolymerization property of catalyst, etc. In slurry process of ethylene polymerization, it is required that the catalyst used has a high catalytic activity, and the control of the particle size and the particle size distribution of the produced ethylene polymer is also very important. In ethylene polymerization, in particular, ethylene slurry polymerization, fine polymer particles are easily produced, and such fines will likely cause the generation of static charges and "dust" phenomenon, and sometimes result in the formation of agglomerates, which might block pipes of the production plant. The most effective approach for controlling the particle size and the particle size distribution of a polymer is to control the particle size and the particle size distribution of the catalyst.

In the prior art, in order to obtain a catalyst having uniform particle diameter and better particle morphology, the following two methods are generally utilized to prepare the catalysts.

In the first method, a magnesium compound, for example magnesium dichloride, is dissolved in a solvent to form a homogeneous solution, then the solution is combined with a titanium compound and optionally an electron donor compound, to precipitate solids comprising magnesium, titanium, and optionally the electron donor compound. The solids are further treated with a liquid titanium compound to give the particulate catalyst. See, for example, CN1099041A and CN1229092A. This conventional method has a drawback that the particle size and particle size distribution of the catalyst particles are controlled fully through the precipitation process, which is a process of recrystallizing magnesium-containing support and of which stable control is difficult.

For example, Patent Application CN1229092 discloses a catalyst component containing magnesium dichloride as support and titanium tetrachloride as active component, which catalyst component is prepared by dissolving MgCl₂ in a solvent system to form a homogeneous solution, then reacting the solution with TiCl₄ at low temperature in the presence of precipitator, phthalic anhydride, and raising slowly the temperature to precipitate solid catalyst component. When so prepared catalyst component is used in ethylene polymerization, the obtained polymers have good particle morphology, however, hydrogen response and catalytic activity of the catalyst are still not satisfied. Additionally, in the preparation of the catalyst component, it is necessary to use organic substance such as phthalic anhydride as precipitator to facilitate the precipitation of solids and a large amount of titanium tetrachloride is required. Therefore, on the one hand, the presence of an anhydride may adversely affect the catalyst, and on the other hand, the use of a large amount of titanium tetrachloride will increase the production cost of the catalyst and aggravate the problem of environmental pollution. Furthermore, such a reaction system is likely viscous so that the preparation of catalyst is difficult.

In the second method, an active component of a catalyst is supported directly on an inert support, for example, silica and the like. Since silicas have particle diameters easily controlled and good particle morphology, particulate catalysts having uniform particles can be obtained. However, because the loaded amount of an active component on a support is limited, a so-prepared catalyst has a lower Ti content and thereby a lower polymerization activity. For example, Patent Application CN1268520 discloses a catalyst component containing magnesium dichloride and silica as support and titanium tetrachloride as active component, which catalyst component is prepared by reacting MgCl₂ with TiCl₄ in THF, combining the reaction mixture with SiO₂ which has been treated with an alkyl aluminum, and removing THF to form the catalyst component. Since the catalyst component has a lower Ti content, it exhibits lower catalytic activity when used in ethylene polymerization. Therefore, although this catalyst system is applicable to gas phase fluidized bed process of ethylene polymerization, it is not suitable for slurry process of ethylene polymerization due to its lower catalytic activity.

The closest prior art is CN1266066 according to the DATABASE CA CHEMICAL ABSTRACTS SERVICE, COLUMBUS, OHIO, US; JIN; MAOZHU ET AL JIN, MAOZHU ET AL: "Preparation of compound catalysts for preparing polypropylene with broad molecular weight distributions preparation of compound catalysts for preparing polypropylene with broad molecular weight distributions" ( STN Database accession no. 2001:276062) discloses the preparation of compound catalysts for preparing polypropylene. In this connection MgCl₂, epichlorohydrine, tributyl phosphate, TiCl₄ and silane (among others) are used. It is not specified whether silane is added internally or externally.

It is well known that, in slurry process of ethylene polymerization, in addition to high catalytic activity and desired particle size distribution, the catalysts used are required to have good hydrogen response in order to produce ethylene homopolymer and copolymer having good properties, in other words, the melt indices of the final polymers should be easily regulated by changing hydrogen partial pressure during the polymerization to obtain different commercial grades of polyethylene resin. However, the aforesaid catalyst systems are still not satisfied in hydrogen response.

Thus, it is very desired to provide a catalyst useful in ethylene polymerization, especially slurry polymerization, which should have high catalytic activity, uniform particle diameter, narrow particle size distribution, and good hydrogen response.

### Summary

An object of the invention is to provide a method for preparing a catalyst component for ethylene polymerization where the catalysts according to the invention exhibit higher activities. This problem is solved by the method according to claim 1.

### Detailed Description of the Preferred Embodiments

As used herein, the term "polymerization" intends to encompass homopolymerization and copolymerization. As used herein, the term "polymer" intends to encompass homopolymer, copolymer and terpolymer.

As used herein, the term "catalyst component" intends to means main catalyst component or procatalyst, which, together with a conventional cocatalyst, for example an alkyl alumimum, constitutes the catalyst for ethylene polymerization.

In one aspect a catalyst component for ethylene polymerization is provided which comprises a reaction product of a magnesium complex at least one titanium compound, at least one alcohol compound, at least one silicon compound, and optionally an organic aluminum compound. The catalyst component according to the invention has advantages such as high catalytic activity, good hydrogen response, and narrow particle size distribution of polymer, and is very suitable for ethylene polymerization, particularly slurry process of ethylene polymerization, and combined polymerization process that requires a high activity of catalyst.

The magnesium complex is a product obtained by dissolving a magnesium halide in a solvent system comprising an organic epoxy compound and an organo phosphorus compound. In general, such a product is a homogeneous and clear solution.

The magnesium halide is selected from the group consisting of magnesium dihalides, water or alcohol complexes of magnesium dihalides, and derivatives of magnesium dihalides in which one halogen atom is replaced with hydrocarbyl groups or halogenated hydrocarbyl-oxy groups. Examples include magnesium dichloride, magnesium dibromide, phenoxy magnesium chloride, isopropoxy magnesium chloride, butoxy magnesium chloride, with magnesium dichloride being preferred. These magnesium halides may be used alone or in combination.

The organic epoxy compound in the solvent system is selected from the group consisting of aliphatic epoxy compounds and diepoxy compounds, halogenated aliphatic epoxy compounds and diepoxy compounds, glycidyl ethers, having from 2 to 8 carbon atoms. Examples include, but are not limited to, ethylene oxide, propylene oxide, butylene oxide, vinyl epoxy ethane, butadiene dioxide, epoxy chloropropane, glycidyl methyl ether, and diglycidyl ether. These organo epoxy compounds may be used alone or in combination.

The organo phosphorus compound in the solvent system is a hydrocarbyl ester or a halogenated hydrocarbyl ester of orthophosphoric acid or phosphorous acid. Examples include trimethyl orthophosphate, triethyl orthophosphate, tributyl orthophosphate, triphenyl orthophosphate, trimethyl phosphite, triethyl phosphite, tributyl phosphite and tribenzyl phosphite. These organo phosphorus compounds may be used alone or in combination.

In the formation of the magnesium complex, the amount of the organic epoxy compound used is in a range of from 0.2 to 10 moles, preferably from 0.3 to 4 moles; and the amount of the organo phosphorus compound used is in a range of from 0.1 to 10 moles, preferably from 0.2 to 4 moles, with respect to one mole of the magnesium halide.

In order to dissolve more sufficiently the magnesium halide, an inert diluent is optionally contained in the solvent system. The inert diluent comprises generally aromatic hydrocarbons or alkanes, as long as it can facilitate the dissolution of the magnesium halide. Examples of the aromatic hydrocarbons include benzene, toluene, xylene, chlorobenzene, dichlorobenzene, trichlorobenzene, chlorotoluene, and derivatives thereof. Examples of the alkanes include linear alkanes, branched alkanes and cycloalkanes, having from 3 to 20 carbon atoms, for example, butane, pentane, hexane, cyclohexane, and heptane. These inert diluents may be used alone or in combination. The amount of the inert diluent, if used, is not especially limited, however, from the viewpoint of easiness of operation and economical efficiency, it is preferably used in an amount of from 0.2 to 10 liters with respect to one mole of the magnesium halide.

The alcohol compounds include linear or branched alkyl or cycloalkyl alcohols with 1 to 10 carbon atoms, or aryl or aralkyl alcohols with 6 to 20 carbon atoms, the alcohol compounds being optionally substituted by halogen atom(s). Examples of the alcohol compounds include: aliphatic alcohols, for example, methanol, ethanol, propanol, isopropanol, butanol, isobutanol, glycerol, hexanol, 2-methylpentanol, 2-ethylbutanol, n-heptanol, 2-ethylhexanol, n-octanol, decanol, and the like; cycloalkyl alcohols, for example, cyclohexanol, methyl cyclohexanol; aromatic alcohols, for example, benzyl alcohol, methyl benzyl alcohol, α-methyl benzyl alcohol, α, α-dimethyl benzyl alcohol, isopropyl benzyl alcohol, phenylethyl alcohol, phenol, and the like; halogen-containing alcohols, for example, trichloromethanol, 2,2,2-trichloroethanol, trichlorohexanol, and the like. Among these, ethanol, butanol, 2-ethylhexanol, and glycerol are preferred. These alcohol compounds may be used alone or in combination.

According to a preferred embodiment, a combination of the alcohol compounds, for example, a combination of ethanol and 2-ethylhexanol, is used. The alcohols constituting the combination of the alcohol compounds can be added simultaneously or separately. The ratio of the alcohols in the combination is not especially limited. However, in the case where a combination of ethanol and 2-ethylhexanol is used, the molar ratio of ethanol to 2-ethylhexanol is preferably in a range of from 1:4 to 4:1.

The organic aluminum compounds have a general formula AlR⁴ₙX¹₃₋ₙ, in which R⁴ is independently hydrogen or a hydrocarbyl having 1 to 20 carbon atoms, especially an alkyl, an aralkyl or an aryl; X¹ is a halogen, especially chlorine or bromine; and n is a value satisfying 1<n≤3. Examples include trimethyl aluminum, triethyl aluminum, triisobutyl aluminum, trioctyl aluminum, diethyl aluminum hydride, diisobutyl aluminum hydride, and alkyl aluminum halides such as diethyl aluminum chloride, di-isobutyl aluminum chloride, ethyl aluminum sesquichloride, and ethyl aluminum dichloride. Among these, alkyl aluminum halides are preferred, and diethyl aluminum chloride is the most preferred. These organic aluminum compounds may be used alone or in combination. In the catalyst component according to the invention, the organic aluminum compound is an optional component. Adding an amount of the organic aluminum compound contributes to the improvement of the activity and hydrogen response of the catalyst component, however, excessive organic aluminum compound might inhibit the activity of the catalyst component, and make the reaction system viscous, thereby going against the precipitation of the catalyst component. Therefore, the amount of the organic aluminum compound used is preferably in a range of from 0 to 5 moles, with respect to one mole of the magnesium halide.

The titanium compounds have a general formula Ti(OR)ₐX_{b}, in which R is a C₁-C₁₄ aliphatic or aromatic hydrocarbyl, X is a halogen, a is 0, 1 or 2, b is an integer of from 1 to 4, and a+b=3 or 4. Titanium tetrachloride, titanium tetrabromide, titanium tetraiodide, tetrabutoxy titanium, tetraethoxy titanium, triethoxy titanium chloride, titanium trichloride, diethoxy titanium dichloride, ethoxy titanium trichloride are preferred. These titanium compounds may be used alone or in combination.

The silicon compounds are organic silicon compounds having no active hydrogen and having a general formula R¹ₓR²_{y}Si(OR³)_{z}, in which R¹ and R² are independently a hydrocarbyl, preferably an alkyl having from 1 to 10 carbon atoms, or a halogen, R³ is a hydrocarbyl, preferably an alkyl having from 1 to 10 carbon atoms, x, y and z are integers, and 0≤x≤2, 0≤y≤2, 0≤z≤4, and x+y+z=4.

Examples of the silicon compounds represented by the above formula include tetramethoxysilicane, tetraethoxysilicane, tetrapropoxysilicane, tetrabutoxysilicane, tetra(2-ethylhexoxy)silicane, ethyltrimethoxysilicane, ethyltriethoxysilicane, methyltrimethoxysilicane, methyltriethoxysilicane, n-propyltriethoxysilicane, n-propyltrimethoxysilicane, decyltrimethoxysilicane, decyltriethoxysilicane, cyclopentyltrimethoxysilicane, cyclopentyltriethoxysilicane, 2-methylcyclopentyl trimethoxysilicane, 2,3-dimethylcyclopentyltrimethoxysilicane, cyclohexyltrimethoxysilicane, cyclohexyltriethoxysilicane, vinyltrimethoxysilicane, vinyltriethoxysilicane, t-butyltriethoxysilicane, n-butyltrimethoxysilicane, n-butyltriethoxysilicane, iso-butyltrimethoxysilicane, iso-butyltriethoxysilicane, cyclohexyltriethoxysilicane, cyclohexyttrimethoxysilicane, phenyltrimethoxysilicane, phenyltriethoxysilicane, chlorotrimethoxysilicane, chlorotriethoxysilicane, ethyltriisopropoxysilicane, vinyltributoxysilicane, trimethylphenoxysilicane, methyltriallyloxysilicane, vinyltriacetoxysilicane, dimethyldimethoxysilicane, dimethyldiethoxysilicane, diisopropyldimethoxysilicane, diisopropyldiethoxysilicane, t-butylmethyldimethoxysilicane, t-butylmethyldiethoxysilicane, t-amylmethyldiethoxysilicane, dicyclopentyldimethoxysilicane, dicyclopentyldiethoxysilicane, methylcyclopentyldiethoxysilicane, methylcyclopentyldimethoxysilicane, diphenyldimethoxysilicane, diphenyldiethoxysilicane, methylphenyldiethoxysilicane, methylphenyldimethoxysilicane, di(o-tolyl)dimethoxysilicane, di(o-tolyl)diethoxysilicane, di(m-tolyl)dimethoxysilicane, di(m-tolyl)diethoxysilicane, di(p-tolyl)dimethoxysilicane, di(p-tolyl)diethoxysilicane, trimethylmethoxysilicane, trimethylethoxysilicane, tricyclopentylmethoxysilicane, tricyclopentylethoxysilicane, dicyclopentylmethylmethoxysilicane, cyclopentyldimethylmethoxysilicane. Among these, the preferred are tetraalkoxysilicanes, for example, tetraethoxysilicane and tetrabutoxysilicane, and the most preferred is tetraethoxysilicane. These silicon compounds may be used alone or in combination.

According to the invention, the finally obtained solid titanium-containing catalyst component should comprise the silicon compound in a sufficient amount so as to improve the combined properties of the catalyst. At the same time, the silicon compound also functions as a precipitator, which facilitates the precipitation of the particles of the catalyst component. According to an embodiment of the invention, in the preparation of the solid catalyst component, it is possible to utilize other silicon compounds capable of forming in situ the alkoxy group-containing organic silicon compounds mentioned above, for example, silicon tetrachloride.

As indicated above, the catalyst component for ethylene polymerization according to the invention comprises a reaction product of the magnesium complex, the at least one titanium compound, the at least one alcohol compound, the at least one silicon compound, and optionally the organic aluminum compound, wherein the individual reactants are used in the following amounts: 0.1 to 10 moles, and preferably 1 to 4 moles for the alcohol compound; 0.05 to 1 moles for the organic silicon compound; 0 to 5 moles for the organic aluminum compound; and 1 to 15 moles, and preferably 2 to 10 moles for the titanium compound, with respect to one mole of the magnesium halide.

In an embodiment, the catalyst component according to the invention consists essentially of the aforesaid reaction product. Such a catalyst component may comprise: Ti: 4.0 to 7.5 wt%, Mg: 14 to 19 wt%, Cl: 58 to 68 wt%, Si: 0.2 to 1.2 wt%, alkoxy group: 4.0 to 8.5 wt%, P: 0.1 to 1.0 wt%, and Al: 0 to 0.6 wt%.

In another embodiment, the catalyst component of the invention may be obtained as a supported form on an inorganic oxide support.

Examples of the inorganic oxide support include, but are not limited to, SiO₂, Al₂O₃, and mixtures thereof, and are commercially available. The supports are generally of spherical shape, and have an average particle diameter of from 0.1 µm to 150µm, preferably from 1µm to 50µm, and most preferably from 5µm to 40µm. It is preferable to use a silica having a large specific surface area, preferably from 80m²/g to 300 m²/g, as the support. Such a silica support is in favor of enhancing the loaded amount of a magnesium compound in the catalyst component, and thereby enhancing the loaded amount of the active component of the catalyst, and of preventing the phenomenon that, when magnesium content is higher, irregular agglomerates of a magnesium halide are present in the catalyst component so that the particle morphology of the catalyst component is inferior. Prior to use, the inert supports are preferably subjected to a dewatering treatment by calcination or an activating treatment by alkylation. If used, the inorganic oxide supports are used in an amount of from 40 to 400 grams, and preferably from 80 to 250 grams, with respect to one mole of the magnesium halide in the magnesium complex.

When obtained as a supported form on an inorganic oxide support, the catalyst component according to the invention comprises: Ti: 1.5 to 4.5 wt%; Mg: 4 to 14 wt%; Cl: 20 to 40 wt%; alkoxy group: 1.5 to 4.5 wt%; P: 0.05 to 0.5 wt%; Al: 0 to 0.4 wt%; and the inert support: 20 to 80 wt%. It is understood that such catalyst components further comprise Si derived from the organic silicon compounds.

The present invention provides a method for preparing the catalyst component according to the invention comprising the steps of:
(1) dissolving the magnesium halide in a solvent system comprising the organic epoxy compound and the organic phosphorus compound, the solvent system optionally but preferably further comprising the inert diluent, to form a homogeneous solution;
(2) adding the alcohol compound before, during or after the formation of the homogeneous solution, to finally form a magnesium halide-containing solution;
(3) contacting the solution obtained from step (2) with the titanium compound, with the silicon compound being added before, during or after the contacting, to form a mixture;
(4) heating the mixture slowly to a temperature of from 60 °C to 110 °C and maintaining at that temperature for a period of time, solids gradually precipitating during the heating; and
(5) recovering the solids formed in the step (4), to obtain the catalyst component.

In the step (1), the temperature for dissolution may be in a range of from 40 to 110 °C, and preferably from 50 to 90 °C. The time for which the step (1) is conducted is not especially limited, however, it is generally preferable to maintain further a period of time of from 20 minutes to 5 hours, and preferably from 30 minutes to 2 hours after the solution has become clear.

Before, during or after dissolving the magnesium halide in the solvent system comprising the organic epoxy compound and the organic phosphorus compound to form the homogeneous solution, the alcohol compound is added to the reaction mixture. If the alcohol compound is added before or during the formation of the homogeneous solution, then the formed homogeneous solution is just the magnesium halide-containing solution from the step (2). If the alcohol compound is added after the formation of the homogeneous solution, then it is preferable to stir the reaction mixture at a temperature of from 0 to 110 °C, and preferably from room temperature to 90 °C for from 10 minutes to 5 hours, and preferably from 20 minutes to 2 hours, to form the magnesium halide-containing solution. For convenience, it is preferable to add the alcohol compound before or during the formation of the homogeneous solution.

Prior to the step (3), the organic aluminum compound is optionally added to the magnesium halide-containing solution from the step (2) and the resultant mixture is allowed to react for a period of time, preferably from 10 minetes to 5 hours, and more preferably from 30 minetes to 2 hours. This reaction may be performed at a temperature of from 0 to 80°C, and preferably from room temperature to 50°C.

The step (3) is generally conducted at a low temperature, preferably at a temperature of from -40 °C to 20 °C.
In the step (4), after the reaction mixture is heated slowly to the desired temperature, it may be maintained at that temperature for 30 minutes to 5 hours, and preferably 1 to 3 hours.

The recovering operation of the step (5) includes, for example, filtering and washing with an inert diluent, and optionally drying. The recovering operation may be performed according to conventional processes known in the art.

Those skilled in the art will understand that the above preparation method is generally performed throughout under an inert atmosphere, for example, nitrogen or argon atmosphere.

In an embodiment, a combination of the alcohol compounds, for example, a combination of ethanol and 2-ethylhexanol, is used. The alcohols constituting the combination of the alcohol compounds can be added simultaneously or separately.

In another embodiment, the reaction in the step (3) or (4) is carried out in the presence of the inorganic oxide support, to obtain the catalyst component of the invention supported on the inorganic oxide support.

In still another aspect, a catalyst for ethylene polymerization is provided, which comprises a reaction product of: (1) said catalyst component according to the invention; and (2) an organoaluminum cocatalyst of formula AlR⁵ₙX²₃₋ₙ, in which R⁵ is hydrogen or a hydrocarbyl having 1 to 20 carbon atoms, in particular, an alkyl, an aralkyl, or an aryl; X² is a halogen, in particular chlorine or bromine; and n is a value satisfying 1 < n ≤3.

In an embodiment, the catalyst according to the invention consists of the reaction product of the component (1) and the component (2).
Examples of the organoaluminum cocatalyst include trimethyl aluminum, triethyl aluminum, triisobutyl aluminum, trioctyl aluminum, diethyl aluminum hydride, diisobutyl aluminum hydride, diethyl aluminum chloride, di-isobutyl aluminum chloride, ethyl aluminum sesquichloride, ethyl aluminum dichloride. Among these, trialkyl aluminums are preferable, and triethyl aluminum and triisobutyl aluminum are more preferable. These organoaluminum cocatalysts may be used alone or in combination.

In the catalyst according to the invention, the molar ratio of aluminum in the component (2) to titanium in the component (1) is in a range of from 5 to 500, and preferably from 20 to 200.

In still another aspect, a process for ethylene polymerization, is provided which process comprises the steps of:
(i) contacting ethylene and optionally at least one comonomer with the catalyst according to the invention under polymerization conditions, to form a polymer; and
(ii) recovering the polymer formed in the step (i).

The comonomer may be selected from the group consisting of α-olefins and dienes, having from 3 to 20 carbon atoms. Examples of the α-olefins include propylene, 1-butene, 4-methyl-1-pentene, 1-hexene, 1-octene, styrene, methyl styrene, and the like. Examples of the dienes include cyclopentadiene, vinyl norbornene, 5-ethylidene-2-norbornene.

The polymerization process can be carried out in liquid phase or gas phase. The catalyst according to the invention is especially suitable for a slurry polymerization process, or a combined polymerization process including slurry phase polymerization, for example, a process consisting of slurry phase polymerization and gas phase polymerization.

Examples of media useful in the liquid phase polymerization include saturated aliphatic and aromatic inert solvents, such as propane, isobutane, hexane, heptane, cyclohexane, naphtha, raffinate, hydrogenated gasoline, kerosene, benzene, toluene, xylene.

In order to regulate the molecular weight of the final polymers, hydrogen gas is used as a molecular weight regulator in the polymerization process according to the invention.

The catalysts of the present invention utilize organic silicon compounds having no active hydrogen as precipitators, so that during the preparation of the catalyst component, particles of the catalyst component can be easily precipitated. Thus, there is not need to use a large amount of titanium tetrachloride to facilitate the precipitation of solids and to treat the solids with titanium tetrachloride more than one times. As a result, the amount of titanium tetrachloride used can be reduced significantly. At the same time, the incorporation of the organic silicon compound contributes to the enhancement of the activity of the catalysts and the improvement of the particle morphology of the catalyst components as well as the improvement of the particle morphology of the polymers. When used in ethylene polymerization, the catalysts according to the invention exhibit good hydrogen response.

### Examples

The following examples are given for further illustrating the invention, but do not make limitation to the invention in any way.

### Example 1

### (1) Preparation of a catalyst component

To a reactor, in which air had been sufficiently replaced with high pure N₂, were charged successively with 4.0g of magnesium dichloride, 50ml of toluene, 4.0ml of epoxy chloropropane, 4.0ml of tributyl phosphate, and 6.4ml of ethanol. The mixture was heated to 70°C with stirring. After the solids had been completely dissolved to form a homogeneous solution, the mixture was maintained at 70°C for further one hour. The solution was cooled to 30 °C, then 4.8 ml of 2.2M solution of diethyl aluminum chloride in toluene were added dropwise thereto, and the reaction was maintained at 30 °C for one hour. The reaction mixture was cooled to -5°C, and 40ml of TiCl₄ were added dropwise and slowly thereto, and then 3 ml of tetraethoxy silicane were added. The reaction was allowed to continue for one hour. Then the temperature was raised slowly to 80°C, and the reaction was allowed to continue at that temperature for 2 hours. Then the stirring was stopped and the reaction mixture was allowed to stand still. The suspension was observed to separate very quickly into layers. After removing the supernatant, the residue was washed with toluene twice and with hexane for four times, and then dried by passing a flow of high pure N₂ therethrough. A solid catalyst component having good flowability and narrow particle size distribution was obtained. The composition of the catalyst component is shown in Table 1 below.

### (2) Ethylene Polymerization

Under nitrogen atmosphere, about 0.5 g of the above catalyst component was dispersed in 50 ml of hexane through stirring, to form a suspension of the solid catalyst component in hexane useful in ethylene polymerization.

To a 2L stainless steel autoclave, in which air had been sufficiently replaced with high pure N2, were charged with 1 L of hexane, 1.0 ml of 1 M solution of triethyl aluminum in hexane, and an aliquot of the suspension of the solid catalyst component in hexane prepared above (containing 0.3 mg of Ti). The reactor was heated to 70°C, and hydrogen gas was added thereto until the pressure reached 0.28MPa (gauge), then ethylene was added thereto until the total pressure inside the reactor reached 0.73MPa (gauge). The polymerization reaction was allowed to continue at 80 °C for 2 hours, with ethylene being supplied to maintain the total pressure of 0.73MPa (gauge). The polymerization results are shown in Table 2 below.

### Example 2

(1) A catalyst component was prepared according to the procedure as described in Example 1, except that the amount of ethanol was changed from 6.4ml to 5.9ml.
(2) Ethylene polymerization was carried out according to the procedure as described in Example 1. The composition of the catalyst component and the polymerization results are shown in Table 1 and Table 2, respectively.

### Example 3

(1) A catalyst component was prepared according to the procedure as described in Example 2, except that the amount of the solution of diethyl aluminum chloride was changed to 3.8 ml.
(2) Ethylene polymerization was carried out according to the procedure as described in Example 1. The composition of the catalyst component and the polymerization results are shown in Table 1 and Table 2, respectively.

### Example 4

### (1) Preparation of a catalyst component

To a reactor, in which air had been sufficiently replaced with high pure N2, were charged successively with 4.03 g of magnesium dichloride, 50 ml of toluene, 4.0 ml of epoxy chloropropane, 4.0ml of tributyl phosphate, and 6.4ml of ethanol. The mixture was heated to 70°C with stirring. After the solids had been completely dissolved to form a homogeneous solution, the mixture was maintained at 70°C for further one hour. The reaction mixture was cooled to-5°C, and 40 ml of TiCl₄ were added dropwise and slowly thereto, and then 3 ml of tetraethoxy silicane were added. The reaction was allowed to continue for one hour. Then the temperature was raised slowly to 80°C, and the reaction was allowed to continue at that temperature for 2 hours. Then the stirring was stopped and the reaction mixture was allowed to stand still. The suspension was observed to separate very quickly into layers. After removing the supernatant, the residue was washed with toluene twice and with hexane for four times, and then dried by passing a flow of high pure N₂ therethrough. A solid catalyst component having good flowability and narrow particle size distribution was obtained. The composition of the catalyst component is shown in Table 1 below.

(2) Ethylene polymerization was carried out according to the procedure as described in Example 1. The polymerization results are shown in Table 2 below.

### Example 5

(1) A catalyst component was prepared according to the procedure as described in Example 4, except that the amount of tetraethoxysilicane was changed to 2 ml.
(2) Ethylene polymerization was carried out according to the procedure as described in Example 1. The composition of the catalyst component and the polymerization results are shown in Table 1 and Table 2, respectively.

### Example 6

(1) A catalyst component was prepared according to the procedure as described in Example 4, except that the amount of tetraethoxysilicane was changed to 1 ml.
(2) Ethylene polymerization was carried out according to the procedure as described in Example 1. The composition of the catalyst component and the polymerization results are shown in Table 1 and Table 2, respectively.

### Example 7

(1) A catalyst component was prepared according to the procedure as described in Example 4, except that the amount of tetraethoxysilicane was changed to 5 ml.
(2) Ethylene polymerization was carried out according to the procedure as described in Example 1. The composition of the catalyst component and the polymerization results are shown in Table 1 and Table 2, respectively.

### Example 8

(1) A catalyst component was prepared according to the procedure as described in Example 4, except that tetraethoxysilicane was replaced with silicon tetrachloride.
(2) Ethylene polymerization was carried out according to the procedure as described in Example 1. The composition of the catalyst component and the polymerization results are shown in Table 1 and Table 2, respectively.

### Example 9

### (1) Preparation of a catalyst component

To a reactor, in which air had been sufficiently replaced with high pure N₂, were charged successively with 4.03 g of magnesium dichloride, 50 ml of toluene, 2.0 ml of epoxy chloropropane, 6.0ml of tributyl phosphate, and 3.4ml of ethanol. The mixture was heated to 70°C with stirring. After the solids had been completely dissolved to form a homogeneous solution, the mixture was maintained at 70°C for further one hour. The reaction mixture was cooled to-5°C, and 60 ml of TiCl₄ were added dropwise and slowly thereto, and then 3 ml of tetraethoxy silicane were added. The reaction was allowed to continue for one hour. Then the temperature was raised slowly to 80°C, and the reaction was allowed to continue at that temperature for 2 hours. Then the stirring was stopped and the reaction mixture was allowed to stand still. The suspension was observed to separate very quickly into layers. After removing the supernatant, the residue was washed with toluene twice and with hexane for four times, and then dried by passing a flow of high pure N₂ terethrough. A solid catalyst component having good flowability and narrow particle size distribution was obtained. The composition of the catalyst component is shown in Table 1 below.

(2) Ethylene polymerization was carried out according to the procedure as described in Example 1. The polymerization results are shown in Table 2 below.

### Example 10

(1) A catalyst component was prepared according to the procedure as described in Example 9, except that the amount of ethanol was changed to 3.9 ml.
(2) Ethylene polymerization was carried out according to the procedure as described in Example 1. The composition of the catalyst component and the polymerization results are shown in Table 1 and Table 2, respectively.

### Example 11

(1) A catalyst component was prepared according to the procedure as described in Example 9, except that the amount of ethanol was changed to 4.4 ml.
(2) Ethylene polymerization was carried out according to the procedure as described in Example 1. The composition of the catalyst component and the polymerization results are shown in Table 1 and Table 2, respectively.

### Example 12

(1) A catalyst component was prepared according to the procedure as described in Example 9, except that the amount of ethanol was changed to 5.0 ml.
(2) Ethylene polymerization was carried out according to the procedure as described in Example 1. The composition of the catalyst component and the polymerization results are shown in Table 1 and Table 2, respectively.

### Example 13

### (1) Preparation of a catalyst component

To a reactor, in which air had been sufficiently replaced with high pure N2, were charged successively with 8.0 Kg of magnesium dichloride, 100 liters of toluene, 4.0 liters of epoxy chloropropane, 12 liters of tributyl phosphate, and 6.9 liters of ethanol. The mixture was heated to 70°C with stirring. After the solids had been completely dissolved to form a homogeneous solution, the mixture was maintained at 70°C for further one hour. The reaction mixture was cooled to-5°C, and 120 liters of TiCl₄ were added slowly thereto, and then 6.0 liters of tetraethoxy silicane were added. The reaction was allowed to continue for one hour. Then the temperature was raised slowly to 80°C, and the reaction was allowed to continue at that temperature for 2 hours. Then the stirring was stopped and the reaction mixture was allowed to stand still. The suspension was observed to separate very quickly into layers. After removing the supernatant, the residue was washed with hexane for four times, and then dried under vacuum. A solid catalyst component having good flowability and narrow particle size distribution was obtained. The composition of the catalyst component is shown in Table 1 below.

(2) Ethylene polymerization was carried out according to the procedure as described in Example 1. The polymerization results are shown in Table 2 below.

### Comparative Example 1

(1) A catalyst component was prepared according to the procedure as described in Example 4, except that tetraethoxysilicane was replaced with phthalic anhydride.
(2) Ethylene polymerization was carried out according to the procedure as described in Example 4. The composition of the catalyst component and the polymerization results are shown in Table 1 and Table 2, respectively.

### Comparative Example 2

(1) The procedure as described in Example 4 (1) was repeated, except that tetraethoxysilicane was not used. It was observed that the precipitation of the catalyst component was difficult, and the precipitated particles were extremely fine so that settlement was very difficult. Therefore, no catalyst component was obtained.

It can be seen from the polymerization results shown in Table 2 that, under the same polymerization conditions, the catalysts according to the invention exhibit higher activities. Furthermore, due to the incorporation of the organic silicon compounds into the catalyst components according to the invention, the precipitation of the catalyst components was easier, the particle size distribution of the resultant polymers was narrower than that in Comparative Example 1 (using phthalic anhydride as precipitator), and both the excessively large particles and the excessively small particles are less.

**Table 1 Compositions of the catalyst components**

| Table 1 Compositions of the catalyst components | | | | | | |
|---|---|---|---|---|---|---|
| No. | Ti (wt%) | Mg (wt%) | Cl (wt%) | Si (wt%) | OEt (wt%) | P (wt%) |
| Example 1 | 6.1 | 16.0 | 60.0 | 0.2 | 6.7 | 0.49 |
| Example 2 | 5.9 | 16.0 | 59.0 | 0.2 | 6.4 | 0.40 |
| Example 3 | 6.2 | 15.0 | 59.0 | 0.3 | 6.5 | 0.51 |
| Example 4 | 5.6 | 16.0 | 61.0 | 0.3 | 6.3 | 0.52 |
| Example 5 | 5.8 | 17.0 | 59.0 | 0.2 | 6.1 | 0.48 |
| Example 6 | 5.7 | 17.0 | 60.0 | 0.1 | 5.9 | 0.49 |
| Example 7 | 6.0 | 16.0 | 60.0 | 0.4 | 6.4 | 0.51 |
| Example 8 | 5.9 | 17.0 | 62.0 | 0.2 | 6.3 | 0.55 |
| Example 9 | 5.6 | 16.0 | 60.0 | 0.4 | 6.3 | 0.49 |
| Example 10 | 5.7 | 16.0 | 59.0 | 0.4 | 6.3 | 0.49 |
| Example 11 | 6.0 | 16.0 | 60.0 | 0.3 | 6.4 | 0.50 |
| Example 12 | 6.2 | 16.0 | 59.0 | 0.3 | 6.5 | 0.47 |
| Example 13 | 5.7 | 16.0 | 60.0 | 0.3 | 6.3 | 0.49 |
| Comp. Ex. 1 | 5.5 | 16.0 | 60.0 | - | - | - |

It should be understood that, in addition to the main components as shown in the above table, the catalyst components may further contain solvent (volatiles) and species derived from the organo phosphorus compound, the organic epoxy compound, the organic aluminum compound, and the like.

**Table 2 Polymerization Results**

| No. | Activity 10⁴gPE/gCat. | BD g/cm⁻³ | MI_{2,16} g/10min | Particle size distribution of polymer (mesh) | | | |
|---|---|---|---|---|---|---|---|
| | | | | <20 | 20-100 | 100-200 | >200 |
| Example 1 | 4.8 | 0.31 | 0.6 | 0.8 | 93.4 | 5.1 | 0.7 |
| Example 2 | 4.5 | 0.30 | 0.5 | 1.3 | 94.3 | 3.8 | 0.6 |
| Example 3 | 4.3 | 0.31 | 0.6 | 0.5 | 94.2 | 4.3 | 1.0 |
| Example 4 | 4.7 | 0.30 | 0.8 | 1.3 | 95.6 | 2.8 | 0.3 |
| Example 5 | 4.3 | 0.29 | 0.7 | 2.6 | 92.2 | 4.0 | 1.2 |
| Example 6 | 4.1 | 0.30 | 0.6 | 4.1 | 89.5 | 5.6 | 0.8 |
| Example 7 | 4.3 | 0.30 | 0.6 | 0.7 | 96.5 | 2.1 | 0.7 |
| Example 8 | 4.2 | 0.31 | 0.6 | 2.2 | 91.7 | 5.2 | 0.9 |
| Example 9 | 5.1 | 0.36 | 0.7 | 0.5 | 93.9 | 5.3 | 0.3 |
| Example 10 | 5.1 | 0.36 | 0.8 | 1.8 | 90.0 | 7.4 | 0.8 |
| Example 11 | 4.9 | 0.35 | 0.5 | 2.2 | 89.7 | 6.9 | 1.2 |
| Example 12 | 4.5 | 0.35 | 0.6 | 2.8 | 88.1 | 7.8 | 1.3 |
| Example 13 | 4.9 | 0.35 | 0.5 | 1.7 | 88.0 | 9.9 | 0.4 |
| Comp. Ex. 1 | 4.0 | 0.30 | 0.4 | 12.1 | 77.9 | 7.8 | 2.2 |

### Example 14

### (1) Preparation of a catalyst component

To a reactor, in which air had been sufficiently replaced with high pure N₂, were charged successively with 4.0g of magnesium dichloride, 80ml of toluene, 4.0ml of epoxy chloropropane, 4.0ml of tributyl phosphate, and 6.4ml of ethanol. The mixture was heated to 70°C with stirring. After the solids had been completely dissolved to form a homogeneous solution, the mixture was maintained at 70°C for further one hour. The solution was cooled to 30 °C, then 4.8 ml of 2.2M solution of diethyl aluminum chloride in toluene were added dropwise thereto, and the reaction was maintained at 30 °C for one hour. The reaction mixture was cooled to -25°C, 40ml of TiCl₄ were added dropwise and slowly thereto, and the reaction was allowed to continue with stirring for 0.5 hours. Then 5 g of treated inert support (Davison Catalysts XPO 2485 Silica, which had been treated by calcinating at 200°C for 2 hours and at 600°C for 4 hours) was added to the reaction mixture, and the reaction was allowed to continue with stirring for 0.5 hours. Next, 3 ml of tetraethoxy silicane were added to the reaction mixture, and the reaction was allowed to continue for 1 hour. Then the temperature was raised slowly to 85 °C, and the reaction was allowed to continue for 2 hours. Then the stirring was stopped and the reaction mixture was allowed to stand still. The suspension was observed to separate very quickly into layers. After removing the supernatant, the residue was washed with toluene twice and with hexane for four times, and then dried by passing a flow of high pure N₂ therethrough. A solid catalyst component having good flowability and narrow particle size distribution was obtained.

### (2) Ethylene polymerization

To a 2L stainless steel autoclave, in which air had been sufficiently replaced with high pure N2, were charged with 1 L of hexane, 1.0 ml of 1 M solution of triethyl aluminum in hexane, and 10 mg of the solid catalyst component prepared above. The reactor was heated to 70°C, and hydrogen gas was added thereto until the pressure reached 0.28MPa (gauge), then ethylene was added thereto until the total pressure inside the reactor reached 0.73MPa (gauge). The polymerization reaction was allowed to continue at 80 °C for 2 hours, with ethylene being supplied to maintain the total pressure of 0.73MPa (gauge). The polymerization results are shown in Table 3 below.

### Example 15

(1) A catalyst component was prepared according to the procedure as described in Example 14, except that the amount of ethanol was changed from 6.4ml to 5.9ml.
(2) Ethylene polymerization was carried out according to the procedure as described in Example 14. The polymerization results are shown in Table 3.

### Example 16

(1) A catalyst component was prepared according to the procedure as described in Example 14, except that the amount of ethanol was changed from 6.4ml to 3.2ml.
(2) Ethylene polymerization was carried out according to the procedure as described in Example 14. The polymerization results are shown in Table 3.

### Example 17

(1) A catalyst component was prepared according to the procedure as described in Example 15, except that no diethyl aluminum chloride was used.
(2) Ethylene polymerization was carried out according to the procedure as described in Example 14. The polymerization results are shown in Table 3.

### Example 18

(1) A catalyst component was prepared according to the procedure as described in Example 16, except that no diethyl aluminum chloride was used.
2.(2) Ethylene polymerization was carried out according to the procedure as described in Example 14. The polymerization results are shown in Table 3.

### Example 19

### (1) Preparation of a catalyst component

To a reactor, in which air had been sufficiently replaced with high pure N₂, were charged successively with 4.03 g of magnesium dichloride, 50 ml of toluene, 4.0 ml of epoxy chloropropane, 4.0ml of tributyl phosphate, and 6.4ml of ethanol. The mixture was heated to 70°C with stirring. After the solids had been completely dissolved to form a homogeneous solution, the mixture was maintained at 70°C for further one hour. The reaction mixture was cooled to-25°C, and thereto was added 5 g of inert support (XPO 2485 Silica, which had been treated by calcinating at 200°C for 2 hours and at 600°C for 4 hours), and then the reaction was allowed to continue with stirring for 0.5 hours. Next, 40 ml of TiCl₄ were added dropwise and slowly thereto, and then 3 ml of tetraethoxy silicane were added. The reaction was allowed to continue for one hour. Then the temperature was raised slowly to 85 °C, and the reaction was allowed to continue for 2 hours. Then the stirring was stopped and the reaction mixture was allowed to stand still. The suspension was observed to separate very quickly into layers. After removing the supernatant, the residue was washed with toluene twice and with hexane for four times, and then dried by passing a flow of high pure N₂ therethrough. A solid catalyst component having good flowability and narrow particle size distribution was obtained.

(2) Ethylene polymerization was carried out according to the procedure as described in Example 14. The polymerization results are shown in Table 3.

### Example 20

(1) A catalyst component was prepared according to the procedure as described in Example 17, except that the amount of tetraethoxysilicane was changed to 4 ml.
(2) Ethylene polymerization was carried out according to the procedure as described in Example 14. The polymerization results are shown in Table 3.

### Example 21

(1) A catalyst component was prepared according to the procedure as described in Example 17, except that the amount of tetraethoxysilicane was changed to 5 ml.
(2) Ethylene polymerization was carried out according to the procedure as described in Example 14. The polymerization results are shown in Table 3.

### Example 22

(1) A catalyst component was prepared according to the procedure as described in Example 17, except that tetraethoxysilicane was replaced with silicon tetrachloride.
(2) Ethylene polymerization was carried out according to the procedure as described in Example 14. The polymerization results are shown in Table 3.

### Example 23

(1) A catalyst component was prepared according to the procedure as described in Example 17, except that the 5.9 ml of ethanol were replaced with 16.4ml of isooctanol.
(2) Ethylene polymerization was carried out according to the procedure as described in Example 14. The polymerization results are shown in Table 3.

**Table 3**

| No. | Ti (wt%) | Mg (wt%) | Cl (wt%) | Activity 10⁴gPE/gCat. | BD g/cm⁻³ | MI_{2.16} g/10min | Particle size distribution of polymer (mesh) | | | |
|---|---|---|---|---|---|---|---|---|---|---|
| | | | | | | | <20 | 20-100 | 100-200 | >200 |
| Ex. 14 | 3.6 | 8.1 | 30.1 | 21.5 | 0.35 | 0.9 | 2.0 | 95.0 | 3.0 | / |
| Ex.15 | 3.5 | 8.0 | 30.0 | 23.1 | 0.36 | 1.0 | 1.2 | 96.3 | 2.5 | / |
| Ex.16 | 3.1 | 8.2 | 29.8 | 25.4 | 0.35 | 4.8 | 0.5 | 96.2 | 3.3 | / |
| Ex.17 | 3.3 | 8.1 | 30.0 | 24.1 | 0.35 | 0.8 | 0.8 | 97.1 | 2.1 | / |
| Ex.18 | 3.2 | 7.9 | 30.0 | 26.4 | 0.36 | 0.7 | 1.0 | 97.2 | 2.8 | / |
| Ex. 19 | 3.3 | 8.0 | 30.0 | 25.5 | 0.35 | 0.9 | 0.5 | 96.7 | 2.8 | / |
| Ex. 20 | 3.4 | 8.2 | 30.1 | 24.8 | 0.36 | 1.0 | 0.7 | 96.9 | 2.4 | / |
| Ex. 21 | 3.4 | 8.1 | 30.4 | 24.9 | 0.36 | 0.9 | 0.3 | 97.0 | 2.7 | / |
| Ex. 22 | 3.1 | 8.0 | 30.0 | 23.1 | 0.35 | 1.2 | 0.7 | 96.8 | 2.5 | / |
| Ex. 23 | 3.5 | 8.3 | 30.0 | 22.0 | 0.37 | 1.2 | 0.1 | 97.5 | 2.4 | |

### Example 24

### (1) Preparation of a catalyst component

To a reactor, in which air had been sufficiently replaced with high pure N₂, were charged successively with 4.0 g of magnesium dichloride, 50 ml of toluene, 4.0 ml of epoxy chloropropane, 4.0ml of tributyl phosphate, and 3.4ml of ethanol. The mixture was heated to 65 °C with stirring. After the solids had been completely dissolved to form a homogeneous solution, 5.5 ml of 2-ethylhexanol were added dropwise thereto, and the mixture was maintained at 65 °C for further one hour. The reaction mixture was cooled to -5°C, 60 ml of TiCl₄ were added dropwise and slowly thereto, and then 3 ml of tetraethoxy silicane were added. The reaction was allowed to continue for 0.5 hours. Then the temperature was raised slowly to 85 °C, and the reaction was allowed to continue for 2 hours. Then the stirring was stopped and the reaction mixture was allowed to stand still. The suspension was observed to separate very quickly into layers. After removing the supernatant, the residue was washed with toluene twice and with hexane for four times, and then dried by passing a flow of high pure N₂ therethrough. A solid catalyst component having good flowability and narrow particle size distribution was obtained.

### (2) Ethylene polymerization

To a 2L stainless steel autoclave, in which air had been sufficiently replaced with high pure N2, were charged with 1L of hexane, 1.0 ml of 1M solution of triethyl aluminum in hexane, and a suspension of the solid catalyst component prepared above in hexane (containing 0.3 mg of Ti). The reactor was heated to 70°C, and hydrogen gas was added thereto until the pressure reached 0.28MPa (gauge), then ethylene was added thereto until the total pressure inside the reactor reached 0.73MPa (gauge). The polymerization reaction was allowed to continue at 80 °C for 2 hours, with ethylene being supplied to maintain the total pressure of 0.73MPa (gauge). The polymerization results are shown in Table 4.

### Example 25

(1) A catalyst component was prepared according to the procedure as described in Example 24, except that the amount of 2-ethylhexanol was changed from 5.5 ml to 7.7 ml.
(2) Ethylene polymerization was carried out according to the procedure as described in Example 24. The polymerization results are shown in Table 4.

### Example 26

(1) A catalyst component was prepared according to the procedure as described in Example 24, except that the amount of 2-ethylhexanol was changed to 3.3 ml.
(2) Ethylene polymerization was carried out according to the procedure as described in Example 24. The polymerization results are shown in Table 4.

### Example 27

(1) The catalyst component as prepared in Example 24 was used.
(2) Ethylene polymerization

To a 2L stainless steel autoclave, in which air had been sufficiently replaced with high pure N2, were charged with 1L of hexane, 1.0 ml of 1 M solution of triethyl aluminum in hexane, and a suspension of the above solid catalyst component in hexane (containing 0.5 mg of Ti). The reactor was heated to 70°C, and hydrogen gas was added thereto until the pressure reached 0.38MPa (gauge), then ethylene was added thereto until the total pressure inside the reactor reached 0.73MPa (gauge). The polymerization reaction was allowed to continue at 80 °C for 2 hours, with ethylene being supplied to maintain the total pressure of 0.73MPa (gauge). The polymerization results are shown in Table 4.

### Example 28

(1) The catalyst component as prepared in Example 24 was used.
(2) Ethylene polymerization

To a 2L stainless steel autoclave, in which air had been sufficiently replaced with high pure N₂, were charged with 1L of hexane, 1.0 ml of 1M solution of triethyl aluminum in hexane, and a suspension of the above solid catalyst component in hexane (containing 0.8 mg of Ti). The reactor was heated to 70°C, and hydrogen gas was added thereto until the pressure reached 0.48MPa (gauge), then ethylene was added thereto until the total pressure inside the reactor reached 0.73MPa (gauge). The polymerization reaction was allowed to continue at 80 °C for 2 hours, with ethylene being supplied to maintain the total pressure of 0.73MPa (gauge). The polymerization results are shown in Table 4.

### Example 29

(1) The catalyst component as prepared in Example 24 was used.
(2) Ethylene polymerization

To a 2L stainless steel autoclave, in which air had been sufficiently replaced with high pure N2, were charged with 1L of hexane, 1.0 ml of 1M solution of triethyl aluminum in hexane, and a suspension of the above solid catalyst component in hexane (containing 1.3 mg of Ti). The reactor was heated to 70°C, and hydrogen gas was added thereto until the pressure reached 0.58MPa (gauge), then ethylene was added thereto until the total pressure inside the reactor reached 0.73MPa (gauge). The polymerization reaction was allowed to continue at 80 °C for 2 hours, with ethylene being supplied to maintain the total pressure of 0.73MPa (gauge). The polymerization results are shown in Table 4.

### Example 30

(1) The catalyst component as prepared in Example 24 was used.
(2) Ethylene polymerization

To a 2L stainless steel autoclave, in which air had been sufficiently replaced with high pure N₂, were charged with 1L of hexane, 1.0 ml of 1 M solution of triethyl aluminum in hexane, and a suspension of the above solid catalyst component in hexane (containing 1.8 mg of Ti). The reactor was heated to 70°C, and hydrogen gas was added thereto until the pressure reached 0.68MPa (gauge), then ethylene was added thereto until the total pressure inside the reactor reached 0.73MPa (gauge). The polymerization reaction was allowed to continue at 80 °C for 2 hours, with ethylene being supplied to maintain the total pressure of 0.73MPa (gauge). The polymerization results are shown in Table 4.

**Table 4**

| No. | Ti % | Activity KgPE/gCat. | MI | BD | | Particle size distribution of polymer (mesh) | | | | | | |
|---|---|---|---|---|---|---|---|---|---|---|---|---|
| | | | | | <20 | 20-40 | 40-60 | 60-80 | 80-100 | 100-140 | 140-200 | >200 |
| Ex. 24 | 6.2 | 53.1 | 0.71 | 0.34 | 1.3 | 3.1 | 20.3 | 42.8 | 19.7 | 8.0 | 3.0 | 1.6 |
| Ex. 25 | 5.6 | 42.2 | 0.63 | 0.33 | 2.4 | 5.9 | 25.2 | 36.7 | 15.8 | 7.7 | 4.2 | 2.1 |
| Ex. 26 | 5.9 | 51.2 | 0.65 | 0.33 | 1.0 | 1.4 | 10.1 | 45.6 | 32.8 | 6.6 | 1.7 | 0.6 |
| Ex. 27 | 6.2 | 40.8 | 4.10 | 0.34 | 1.5 | 2.1 | 16.1 | 44.2 | 23.0 | 7.5 | 4.1 | 1.5 |
| Ex. 28 | 6.2 | 28.4 | 9.44 | 0.32 | 1.1 | 2.7 | 20.1 | 30.8 | 30.9 | 8.2 | 5.1 | 1.1 |
| Ex. 29 | 6.2 | 11.0 | 110.5 | 0.33 | 1.0 | 1.0 | 11.5 | 22.1 | 39.8 | 13.9 | 8.7 | 2.0 |
| Ex. 30 | 6.2 | 7.5 | 180.6 | 0.33 | 1.0 | 1.9 | 5.1 | 6.4 | 40.9 | 29.2 | 14.1 | 1.4 |

It can be seen from the data shown in Table 4 that, in ethylene polymerization, the catalyst components according to the invention exhibit higher activities, good hydrogen response, and narrow particle size distribution and high bulk density of polymer.

## Claims

1. A method for preparing a catalyst component for ethylene polymerization, comprising the steps of:
(1) dissolving a magnesium halide in a solvent system comprising an organic epoxy compound and an organic phosphorus compound, the solvent system optionally but preferably further comprising an inert diluent, to form a homogeneous solution;
(2) adding an alcohol compound before, during or after the formation of the homogeneous solution, to finally form a magnesium halide-containing solution;
(3) contacting the solution obtained from the step (2) with a titanium compound, with a silicon compound being added before, during or after the contacting, to form a mixture;
(4) heating the mixture slowly to a temperature of from 60 °C to 110 °C and maintaining at that temperature for a period of time, solids gradually precipitating during the heating; and
(5) recovering the solids formed in the step (4), to obtain a catalyst component, wherein:
the alcohol compound is a linear or branched alkyl or cycloalkyl alcohol with 1 to 10 carbon atoms, or an aryl or aralkyl alcohol with 6 to 20 carbon atoms, the alcohol compound being optionally substituted by halogen atom(s);
the titanium compound has a general formula Ti(OR)ₐX_{b}, in which R is a C₁-C₁₄ aliphatic or aromatic hydrocarbyl, X is a halogen, a is 0, 1 or 2, b is an integer of from 1 to 4, and a+b=3 or 4; and
the silicon compound is an organic silicon compound having a general formula R¹ₓR²_{y}Si(OR³)_{z}, in which R¹ and R² are independently a hydrocarbyl or a halogen, R³ is a hydrocarbyl, 0≤x≤2, 0≤y≤2, 0≤z≤4, and x+y+z=4.

2. The method according to claim 1, wherein prior to the step (3), an organic aluminium compound is added to the magnesium halide-containing solution form the step (2) and the resultant mixture is allowed to react for a period of time, said organic aluminium compound having a general formula AlR⁴ₙX¹ₛ₋ₙ, in which R⁴ is hydrogen or a hydrocarbyl having 1 to 20 carbon atoms, X¹ is a halogen, and n is a value satisfying 1<n≤3.

3. The method according to claim 1 or 2, wherein a combination of two or more of the alcohol compounds is used.

4. The method according to claim 3, wherein the combination of the alcohol compounds is a combination of ethanol and 2-ehylhexanol.

5. The method according to anyone of claims 1 to 4, wherein the reaction in the step (3) or (4) is performed in the presence of an inorganic oxide support.

6. The method according to claim 5, wherein the inorganic oxide support is selected from the group consisting of silica, alumina, and mixtures thereof.

## Patentansprüche

1. Verfahren für die Herstellung einer Katalysatorkomponente für die Ethylenpolymerisation, umfassend die Schritte des:
(1) Lösens eines Magnesiumhalogenids in einem Lösungsmittelsystem umfassend eine organische Epoxidverbindung und eine organische Phosphorverbindung, wobei das Lösungsmittelsystem wahlweise, jedoch bevorzugt, ferner ein inertes Verdünnungsmittel umfasst, um eine homogene Lösung zu bilden;
(2) Zusetzens einer Alkoholverbindung vor, während oder nach der Bildung der homogenen Lösung, um schließlich eine Magnesiumhalogenid enthaltende Lösung zu bilden;
(3) Kontaktierens der aus Schritt (2) erhaltenen Lösung mit einer Titanverbindung, wobei eine Siliciumverbindung vor, während oder nach dem Kontaktieren zugegeben wird, um eine Mischung zu bilden;
(4) Erhitzens der Mischung langsam auf eine Temperatur von 60 °C bis 110 °C und Halten bei dieser Temperatur für eine Zeitspanne, wobei Feststoffe allmählich während des Erhitzens ausgefällt werden; und
(5) Gewinnens der in Schritt (4) gebildeten Feststoffe, um eine Katalysatorkomponente zu erhalten, wobei:
die Alkoholverbindung ein linearer oder verzweigter Alkyl- oder Cycloalkylalkohol mit 1 bis 10 Kohlenstoffatomen oder ein Aryl- oder Aralkylalkohol mit 6 bis 20 Kohlenstoffatomen ist, wobei die Alkoholverbindung wahlweise durch Halogenatom(e) substituiert ist;
die Titanverbindung eine allgemeine Formel Ti(OR)ₐX_{b} aufweist, wobei R ein aliphatisches oder aromatisches C₁-C₁₄-Hydrocarbyl ist, X ein Halogen ist, a 0, 1 oder 2 beträgt, b eine ganze Zahl von 1 bis 4 ist und a+b=3 oder 4 ist; und
die Siliciumverbindung eine organische Siliciumverbindung ist, die eine allgemeine Formel R¹ₓR²_{y}Si(OR³)_{z} aufweist, wobei R¹ und R² unabhängig ein Hydrocarbyl oder ein Halogen sind, R³ ein Hydrocarbyl ist, 0≤x≤2, 0≤y≤2, 0≤z≤4 und x+y+z=4.

2. Verfahren nach Anspruch 1, wobei vor Schritt (3) eine organische Aluminiumverbindung der Magnesiumhalogenid enthaltenden Lösung aus Schritt (2) zugegeben wird und der resultierenden Mischung gestattet wird, für eine Zeitspanne zu reagieren, wobei die organische Aluminiumverbindung eine allgemeine Formel AIR⁴ₙX¹₃₋ₙ aufweist, wobei R⁴ Wasserstoff oder ein Hydrocarbyl ist, das 1 bis 20 Kohlenstoffatome aufweist, X¹ ein Halogen ist und n ein Wert ist, der 1<n≤3 entspricht.

3. Verfahren nach Anspruch 1 oder 2, wobei eine Kombination von zwei oder mehr der Alkoholverbindungen verwendet wird.

4. Verfahren nach Anspruch 3, wobei die Kombination der Alkoholverbindungen eine Kombination von Ethanol und 2-Ethylhexanol ist.

5. Verfahren nach einem der Ansprüche 1 bis 4, wobei die Reaktion in Schritt (3) oder (4) in Gegenwart eines anorganischen Oxidträgers durchgeführt wird.

6. Verfahren nach Anspruch 5, wobei der anorganische Oxidträger aus der Gruppe ausgewählt ist bestehend aus Siliciumdioxid, Aluminiumoxid und Mischungen davon.

## Revendications

1. Procédé de préparation d'un composant catalytique pour la polymérisation d'éthylène, comprenant les étapes consistant à :
(1) dissoudre un halogénure de magnésium dans un système de solvants comprenant un composé époxy organique et un composé phosphoreux organique, le système de solvants comprenant en outre facultativement, mais de préférence, un diluant inerte, pour former une solution homogène ;
(2) ajouter un composé alcoolique avant, pendant ou après la formation de la solution homogène, pour finalement former une solution contenant un halogénure de magnésium ;
(3) mettre en contact la solution obtenue dans l'étape (2) avec un composé de titane, avec un composé de silicium qui est ajouté avant, pendant ou après la mise en contact, pour former un mélange ;
(4) chauffer le mélange lentement à une température de 60 °C à 110 °C et maintenir cette température pendant une période de temps, les solides précipitant progressivement pendant le chauffage ; et
(5) récupérer les solides formés dans l'étape (4), pour obtenir un composant catalytique, où :
le composé alcoolique est un alcool alkylique ou cycloalkylique linéaire ou ramifié de 1 à 10 atomes de carbone, ou un alcool arylique ou aralkylique de 6 à 20 atomes de carbone, le composé alcoolique étant facultativement substitué par un ou plusieurs atomes d'halogène ;
le composé de titane a une formule générale Ti(OR)ₐX_{b} où R est un groupe hydrocarbyle aliphatique ou aromatique en C₁ à C₁₄, X est un atome d' halogène, a est 0, 1 ou 2, b est un nombre entier de 1 à 4, et a + b = 3 ou 4 ; et
le composé de silicium est un composé de silicium organique ayant une formule générale R¹ₓR²_{y}Si (OR³)_{z}, où R¹ et R² sont indépendamment un groupe hydrocarbyle ou un atome d'halogène, R³ est un groupe hydrocarbyle, 0 ≤ x ≤ 2, 0 ≤ y ≤ 2, 0 ≤ z ≤ 4 et x + y + z = 4.

2. Procédé selon la revendication 1, dans lequel avant l'étape (3), un composé d'aluminium organique est ajouté à la solution contenant un halogénure de magnésium de l'étape (2) et le mélange résultant est laissé réagir pendant une période de temps, ledit composé d'aluminium organique ayant une formule générale AlR⁴ₙX¹₃₋ₙ où R⁴ est un atome d' hydrogène ou un groupe hydrocarbyle ayant de 1 à 20 atomes de carbone, X¹ est un atome d'halogène et n est une valeur satisfaisant 1 < n ≤ 3.

3. Procédé selon la revendication 1 ou 2, dans lequel une combinaison de deux composés alcooliques ou plus est utilisée.

4. Procédé selon la revendication 3, dans lequel la combinaison des composés alcooliques est une combinaison d'éthanol et de 2-éthylhexanol.

5. Procédé selon l'une quelconque des revendications 1 à 4, dans lequel la réaction de l'étape (3) ou (4) est réalisée en présence d'un support d'oxyde inorganique.

6. Procédé selon la revendication 5, dans lequel le support d'oxyde inorganique est choisi dans le groupe constitué par la silice, l'alumine et des mélanges de celles-ci.
